# EUROPEAN PATENT APPLICATION

(11) **EP 0 957 049 A1**
(43) Date of publication of application: **17.11.1999**
(21) Application number: 99109519.1
(22) Date of filing: 12.05.1999
(51) Int. Cl.: B65G 47/08

(54) **Modular-station system for preparing and sorting packs of panels for supply to a stacking station**

(30) Priority: 13.05.1998 IT BO980308
(71) Applicant: SELCO SPA, 61100 Pesaro (IT)
(72) Inventor: Naldi, Valter, 40100 Bologna (IT)
(74) Representative: Eccetto, Mauro

(57) **Abstract**

A modular-station system (100) for preparing and sorting packs (2a-...) of panels; the system (100) being located between a cutting station (200) and a stacking station (300); and the system (100) being characterized in that, given a first group of packs (2a-...) of panels of given size and arrangement at the output of the cutting station (200), means (44, 45, 50, 51, 52, 65, 66) are provided for selecting and forming directly, from the first group of packs (2a-...), second groups of said packs (2a-...) for supply to the stacking station (300); the second groups of packs (2a-...) being the best, in terms of quantity and arrangement, for achieving maximum coverage of the pallets at the stacking station (300).

## Description

The present invention relates to a modular-station system for preparing and sorting packs of panels for supply to a stacking station.

In the furniture industry, systems are used for preparing and sorting panels between a cutting station and at least one stacking station. At the output of the cutting station, the cut packs of panels are normally separated and then recomposed and recompacted according to the requirements of the stacking station. Altering and recomposing the order in which the packs of panels leave the cutting station, however, involves a considerable waste of time and the use of high-cost bulky equipment.

It is an object of the present invention to enable rational selection of the panels leaving the cutting station, so as to supply the best combination of packs to the stacking station.

In other words, given a first group of packs of panels of given size and arrangement at the output of the cutting station, the system according to the present invention provides, via means forming part of the system, for selecting and forming directly, from the first group of packs, second groups of packs for supply to the stacking station; said second groups of packs being the best, in terms of quantity and arrangement, for achieving maximum coverage of the pallets at the stacking station.

A non-limiting embodiment of the invention will be described by way of example with reference to the accompanying drawings, in which:
Figure 1 shows a schematic plan view of a modular-station system in accordance with the present invention;
Figure 2 shows a schematic plan view of a sorting and compacting station of the Figure 1 system;
Figure 3 shows a schematic section along line A-A of the Figure 2 station;
Figure 4 shows view B of the Figure 2 sorting and compacting station;
Figure 5 shows a rotation and feed station of the system according to the present invention;
Figures 6-8 show, schematically, various ways in which packs of panels may be fed from the cutting station to the stacking station using the system according to the present invention.

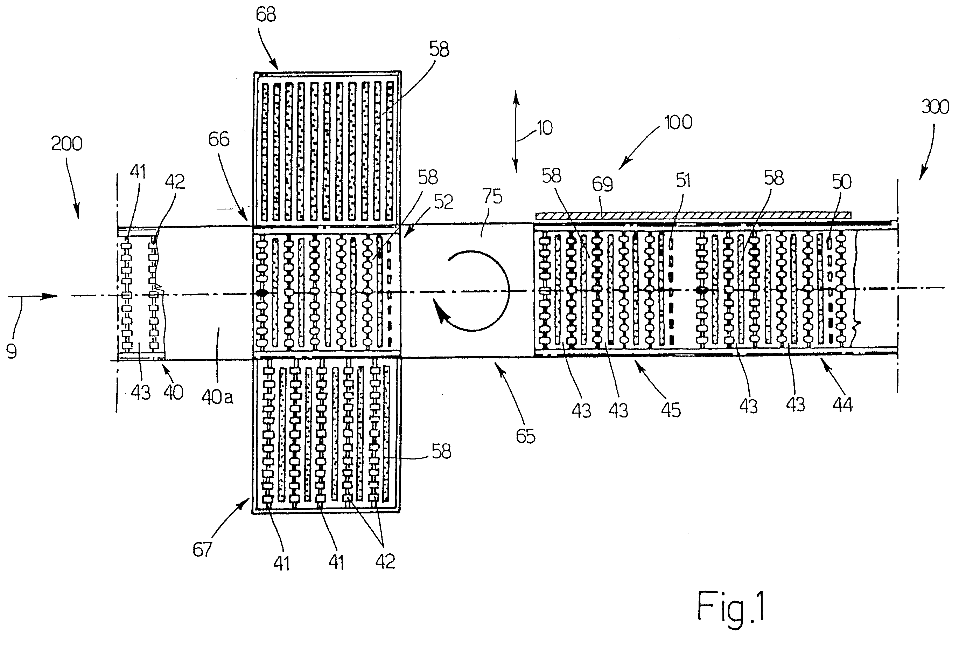

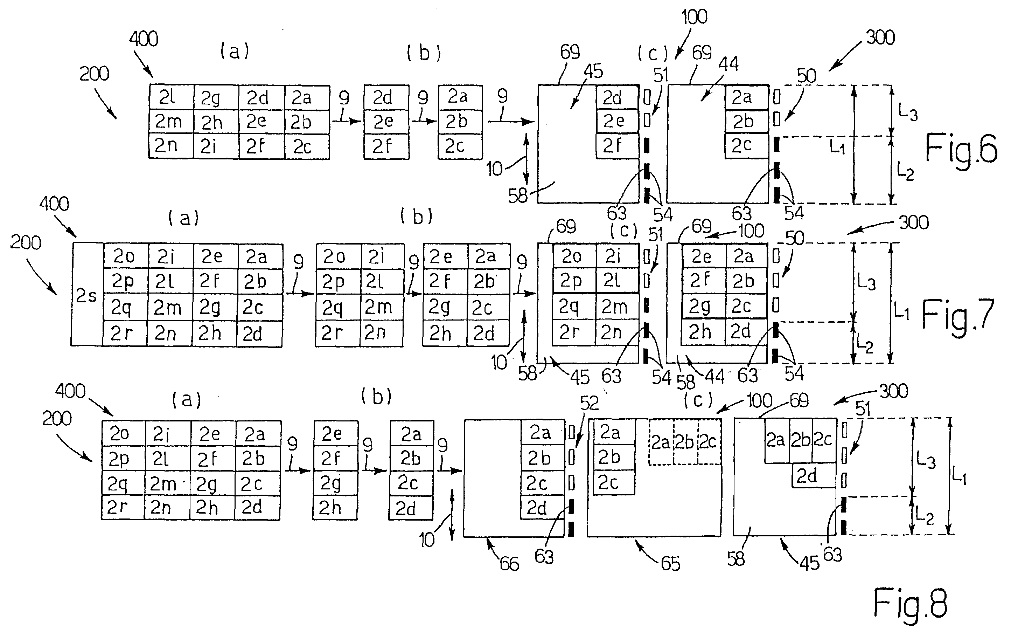

Number 100 in Figure 1 indicates a modular-station system in accordance with the present invention, for preparing and sorting packs 2 of panels, and which is located between a cutting station 200 and a stacking station 300. At cutting station 200 - not shown, and located to the left in Figure 1 - packs 400 (Figures 6-8) of large-size panels are cut in known manner longitudinally and transversely into packs 2 of smaller-size panels.

Packs 2 of panels from cutting station 200 are stacked at stacking station 300 - not shown, and located to the right in Figure 1 - which is described, for example, in European Patent Application EP-98107648.2 filed by the present Applicant, and the content of which forms an integral part of the present description.

It is an object of the present invention to enable rational selection of the panels leaving cutting station 200, so as to supply stacking station 300 with the best combination of packs 2 and achieve maximum coverage of the pallets onto which packs 2 are loaded.

The innovative part to which the present invention relates is shown in the center of Figure 1.

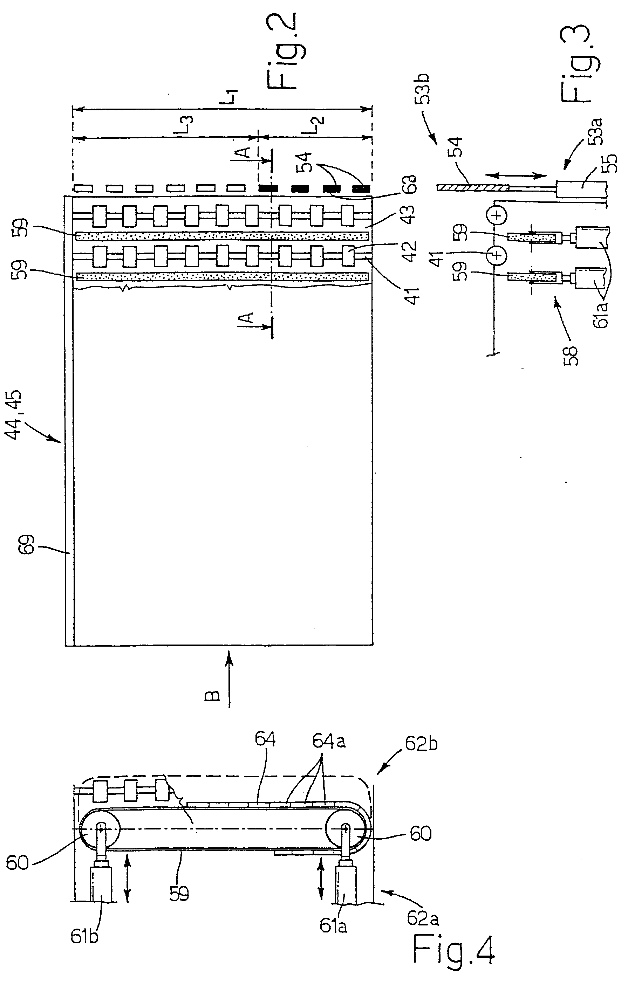

More specifically, system 100 comprises a roller conveyor 40 defined by rows 41 of rollers 42, said rows 41 being spaced and defining gaps 43; and three sorting and compacting stations 44, 45, 66 for sorting and compacting packs 2 from cutting station 200, and each comprising a respective identical arresting device 50, 51, 52. With reference also to Figures 2 and 3, each arresting device 50, 51, 52 is defined by a number of walls 54, which are movable in known manner, by respective actuators 55, from a withdrawn position 53a beneath the conveying surface 40a of conveyor 40, to an extracted position 53b over conveying surface 40a.

As shown in Figures 1 and 2, when raised, walls 54 divide the width L₁ of conveyor 40 into two complementary portions of widths L₂, L₃, and define a discontinuous vertical surface 63 which acts as a stop for packs 2 of panels carried on conveyor 40. In other words, by selectively raising only some of walls 54, the overall width L₁ of the conveyor is divided into a portion of width L₂ in which a pack 2 is prevented from being fed to station 300, and a second portion of width L₃ in which at least one pack 2 may be fed to station 300 (see Figures 6-8).

Arresting devices 50, 51, 52 may, of course, divide the width L₁ of conveyor 40 into portions of widths L₂, L₃ differing from one device 50, 51, 52 to another, so as to define passages and stops for packs 2 according to the desired loading pattern (see Figures 6-8).

Arresting devices 50, 51 in Figure 1 therefore define two stations 44, 45 located in series with respect to the traveling direction 9 of packs 2 from cutting station 200 to stacking station 300, and which provide for sorting and possibly compacting packs 2, and may each preferably, though not necessarily, house a respective transverse feed device 58 described now with reference to Figures 2, 3, 4. Transverse feed device 58 comprises a number of feed belts 59 fitted in known manner to pulleys 60 rotated by actuating means not shown in the accompanying drawings. Belts 59 are each located at a respective gap 43 between two rows 41 of rollers 42, and are movable, by means of a pair of actuators 61a, 61b, from a withdrawn position 62a (shown by the continuous line) beneath conveying surface 40a of conveyor 40, to an extracted position 62b above surface 40a. Transverse feed device 58 provides for feeding packs 2 transversely in both directions along a path 10 perpendicular to direction 9. Belts 59 are made of any suitable plastic material, and may each comprise on the outer surface a respective strip 64, which is also made of plastic material, is possibly defined by segments 64a, and adheres to the underside surface of packs 2 in transit. Each belt 59 may advantageously be covered only partly with segments 64a of respective strip 64, so that the upper surface of strip 64 only adheres to some of packs 2, and provides, for example, for very slightly detaching adjacent packs 2 and so preventing one pack 2, which is to be fed along conveyor portion of width L₃, from taking with it the adjacent pack 2 to be left standing on conveyor portion of width L₂. This simple provision therefore ensures the adjacent pack 2 is maintained in the correct position, i.e. resting against discontinuous vertical surface 63 defined, as stated, by raised walls 54. Conversely, if strip 64 were to be provided along the whole length of respective belt 59, the upper surface of strip 64, when belt 59 is raised, would contact the underside surface of both adjacent packs 2, i.e. the one on the portion of conveyor 40 of width L₃, and the one on the portion of conveyor 40 of width L₂.

Upstream from station 45, there is provided a rotation and feed station 65 comprising a rotation device similar to the one described in European Patent Application EP-94107600.2 filed by the present Applicant, and which is to be considered an integral part of the present description.

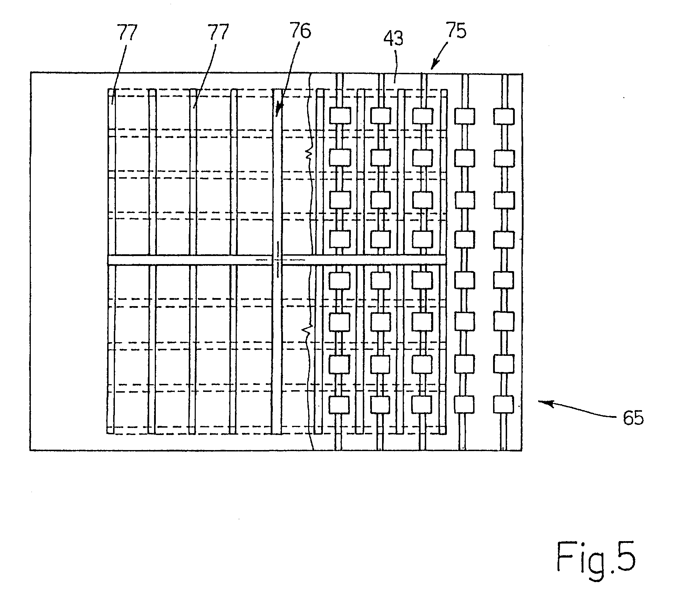

As shown in Figure 5, in addition to arresting device 52, station 65 in the example shown also comprises a device 75 for rotating pack 2 of panels through 90°, and which in turn comprises a frame 76 defined by a number of arms 77, and means (not shown in Figure 5) for moving frame 76 vertically and so raising pack 2. Once extracted from gaps 43, arms 77 may be rotated about a vertical axis into the position shown by the dash lines in Figure 5, so as to effect a 90° rotation of frame 76 and pack/s 2 resting on the frame; and when frame 76 is lowered by said means (not shown), pack 2 is fed once more in direction 9 by powered rollers 42. It should be pointed out that, when frame 76 is lowered, arms 77 are inserted perfectly inside the gaps between adjacent rollers 42, the height of which rollers 42 is so exploited as to prevent arms 77 from contacting the supporting shafts of rollers 42 in rows 41, and so enable packs 2 to be once more fed forward by rollers 42.

A station 66, similar to stations 44, 45 and for sorting and possibly compacting packs 2, is provided upstream from station 65; and the transverse feed device 58 of station 66 provides for feeding the incoming packs 2 on conveyor 40 to two stations 67, 68 located on either side of conveyor 40, and which act as parking stations for given packs 2, which are fed to stacking station 300 when this requires a pack 2 of a given length and width. Stations 67, 68 also comprise feed devices 58 featuring belts 59 and similar to those already described; parking station 67, as shown in Figure 1, may also be provided with rows 41 of rollers 42 identical to those of conveyor 40 and stations 44, 45; and feed devices 58 and rollers 42 at stations 67, 68 provide for feeding packs 2 in stations 67, 68 to and from station 66.

As can be seen, the present invention provides a wide selection of stations 44, 45, 65, 66, which may be arranged variously, in direction 9 to stacking station 300, according to the desired characteristics of system 100.

Operation of system 100 according to the present invention will be described with reference to Figures 6-8.

Each of Figures 6-8 shows a different pattern by which to selectively feed packs 2a-... of panels from cutting station 200 to stacking station 300.

Operation of the system will be described with particular reference to stations 44, 45, 65.

In Figures 6-8 :
- portion (a) shows the position of packs 2a-... of panels formed by cutting larger-size packs 400 of panels longitudinally and transversely at cutting station 200;
- portion (b) shows how system 100 according to the present invention separates packs 2a-... immediately downstream from cutting station 200; and
- portion (c) shows how packs 2a-... are selected, possibly rotated 90°, and recompacted at stations 44, 45, 65, 66.

In the Figure 6 configuration, a number of walls 54 of arresting device 50 at station 44 are raised at conveyor portion of width L₂, so that vertical surface 63 so formed arrests pack 2c in station 44, while packs 2d, 2e, conveyed by powered rollers 42, continue in direction 9 to stacking station 300 (see Figure 1) . In the meantime, a pack 2f is arrested at station 45 by walls 54 of arresting device 51 raised above conveying surface 40a of conveyor 40 (Figure 1), and which are also raised to cover a width L₂ possibly differing from width L₂ of station 44, so that packs 2d, 2e are free to continue along conveyor portion of width L₃ to stacking station 300. A stop member 69 may be provided along the reference (zero) line to position one side of packs 2a-....

At this point, pack 2f may be moved transversely, by means of transverse feed device 58 at station 45, along path 10 until one side of pack 2f contacts stop member 69, and then in direction 9 to station 44 where pack 2f left at station 44 during the previous cycle is fed transversely (by respective device 58) towards pack 2f.

The two side by side packs 2c, 2f may then be fed in direction 9 to stacking station 300.

Figure 7 shows another system configuration for packs 2a-... of panels differing in size from those in Figure 6. The purpose of the loading system in this case is to supply stacking station 300 with a combination of packs 2a-... of an overall size equal to that of packs 2a, 2b, 2c, 2e, 2f, 2g.

More specifically, to begin with, side by side packs 2d, 2h are arrested at station 44, while packs 2a, 2b, 2c, 2e, 2f, 2g are fed normally in direction 9 to stacking station 300. In the meantime, packs 2m, 2n, 2q, 2r are arrested at station 45 by arresting device 51, while packs 2i, 2l, 2o, 2p are fed to station 44 by rows 41 of rollers 42 (see Figure 1). At station 44 packs 2i, 2l, 2o, 2p may be positioned along packs 2d, 2h, the totality of said six packs is then sent to stacking station 300.

Pack 2s, not needed immediately, may be parked in one of stations 67, 68.

The group of packs 2m, 2n, 2q, 2r is completed by simply selecting two packs 2a, 2e (or 2d, 2h) from the next pack 400, and feeding them - in direction 9 by means of rollers 42 and along path 10 by means of belts 59 - into position alongside packs 2m, 2n, 2q, 2r left over from the previous cycle.

As can be seen, the withdrawal of two packs 2a, 2e (or 2d, 2h) to complete the previous packs 2m, 2n, 2q, 2r defines a group which may be fed directly to stacking station 300.

Finally, Figure 8 shows the situation in which at least one group of packs from packs 2a, 2b, 2c, 2d is to be rotated 90°.

As shown in portions (a) and (b) of Figure 8, packs 2a, 2b, 2c, 2d are withdrawn from pack 400 leaving cutting station 200; and packs 2a, 2b, 2c are first fed to rotation and sorting station 65 where they are rotated 90° by device 75 shown in Figure 5. At this point, pack 2d may be positioned alongside packs 2a, 2b, 2c to supply the stacking station with a group of packs 2a-2d defined differently from those in Figures 6 and 7.

System 100 according to the present invention therefore provides for supplying stacking station 300 with groups of packs 2a-... enabling maximum coverage of the pallets supporting the groups, while at the same time maintaining as far as possible the order and arrangement of packs 2a-... leaving cutting station 200.

In an embodiment not shown, devices 50, 51, 52 are dispensed with, and packs 2a-... are selected and possibly recompacted by means of rows 41 of rollers 42 and devices 58 featuring belts 59. Obviously, in this case, belts 59 must each be provided with a strip 64 possibly defined by a number of sectors 64a in series with one another and which, when belts 59 are raised, provide for selecting the overlying packs 2a-... as described previously.

In a further embodiment not shown, the packs are selected by a pickup unit having a number of prongs adjustable telescopically in length, and which, according to the original form and arrangement of the packs, provide for selecting the number and arrangement of packs of panels to supply in a group to the stacking station and so achieve maximum coverage of the pallets.

In yet another embodiment not shown, the stacking station 300 section is provided with walls for arresting the packs of panels and defining, on a pickup station, a number of locations from which separate packs of panels may be transferred simultaneously from the pickup station to an unloading station in one pickup operation. The modular-station system according to the present invention may be operated to advantage in conjunction with a system of walls of the type described above, and which is the object of a parallel application filed by the present Applicant.

## Claims

1. A modular-station system (100) for preparing and sorting packs (2a-...) of panels; the system (100) being located between a cutting station (200) and a stacking station (300); and the system (100) being characterized in that, given a first group of packs (2a-...) of panels of given size and arrangement at the output of said cutting station (200), means (44, 45, 50, 51, 52, 65, 66) are provided for selecting and forming directly, from said first group of said packs (2a-...), second groups of said packs (2a-...) for supply to said stacking station (300); said second groups of packs (2a-...) being the best, in terms of quantity and arrangement, for achieving maximum coverage of the pallets at the stacking station (300).

2. A system (100) as claimed in Claim 1, wherein said system comprises at least one arresting device (50, 51, 52) for arresting said packs (2a-...) of panels in a first direction (9); said at least one arresting device (50, 51, 52) comprising a number of walls (54) arranged in a second direction (10) perpendicular to said first direction (9); said walls (54) being selectively movable from a withdrawn position (53a) to an extracted position (53b), so as to act as stops for at least temporarily arresting at least one pack (2a-...) in said first direction (9).

3. A system (100) as claimed in Claim 2, wherein said at least one arresting device (50, 51, 52) divides the overall width (L₁) of a roller conveyor (40) into two portions having respective widths (L₂, L₃); a first said portion of a first width (L₂) having said walls (54) in said extracted position (53b); a second said portion of a second width (L₃) having said walls (54) in said withdrawn position (53a); and the positions of said walls (54) enabling said packs (2a-...) to be fed selectively in said first direction (9).

4. A system (100) as claimed in any one of the foregoing Claims, wherein are provided at least two stations (44, 45, 66), each equipped with at least one arresting device (50, 51, 52).

5. A system (100) as claimed in Claim 4, wherein said two stations (44, 45, 66) are adjacent to each other.

6. A system (100) as claimed in Claim 4 or 5, wherein at least one of said stations (44, 45, 66) comprises a transverse feed device (58).

7. A system (100) as claimed in Claim 6, wherein said transverse feed device (58) comprises a number of belts (59), each located inside a gap (43) between two adjacent rows (41) of rollers (42) of said conveyor (40).

8. A system (100) as claimed in Claim 6, wherein said number of belts (59) are movable by means of actuators (61a, 61b) from a withdrawn position (62a) beneath a conveying surface (40a) of said conveyor (40), to an extracted position (62b) above said conveying surface (40a), so that the upper surface of said belts (59) contacts the lower surface of said packs (2a-...).

9. A system (100) as claimed in Claim 7 or 8, wherein at least a portion of the length of each belt (59) is covered with a strip (64).

10. A system (100) as claimed in Claim 9, wherein said strip (64) is made of plastic material ensuring the upper surface of the strip adheres firmly to the lower surface of said packs (2a-...).

11. A system (100) as claimed in any one of the foregoing Claims from 4 to 10, wherein said at least two stations (44, 45, 66) are preceded by a rotation station (65) comprising a device (75) for rotating said at least one pack (2a-...) on said conveying surface (40a).

12. A system (100) as claimed in Claims 4 and 11, wherein are provided at least said at least two stations (44, 45, 66) and at least one rotation station (65).

13. A system (100) as claimed in any one of the foregoing Claims from 4 to 12, wherein at least one of said at least two stations (44, 45, 66) is assigned at least one hold station (67, 68) having a respective transverse feed device (58).

14. A system (100) as claimed in Claim 1, wherein said packs (2a-...) are selected and possibly recompacted by means cf a number of rows (41) of powered rollers (42) and a number of transverse feed devices (58) comprising belts (59).

15. A system (100) as claimed in Claim 14, wherein at least a portion of the length of each of said belts (59) is provided with a respective strip (64).

16. A system (100) as claimed in Claim 1, wherein said packs (2a-...) may be selected and possibly recompacted using a pickup unit having a number of prongs adjustable telescopically in length.

17. A system (100) as claimed in any one of the foregoing Claims, wherein said stacking station (300) comprises walls for arresting said packs (2a-...) of panels in said first direction (9), so as to define, at a pickup station, a number of locations from which separate said packs (2a-...) of panels may be transferred simultaneously from the pickup station to an unloading station in one pickup operation.
